# EUROPEAN PATENT APPLICATION

(11) **EP 1 605 183 A1**
(43) Date of publication of application: **14.12.2005**
(21) Application number: 04024639.9
(22) Date of filing: 15.10.2004
(51) Int. Cl.: F16F 1/371

(54) **Vibration isolator**

(30) Priority: 08.06.2004 JP 2004170319
(71) Applicant: Kurashiki Kako Co., Ltd., Kurashiki-shi, Okayama 712-8555 (JP)
(72) Inventor: Fujii, Toru c/o Kurashiki Kako Co., Ltd., Kurashiki-shi Okyama 712-8555 (JP); Miyake, Kazuo c/o Kurashiki Kako Co., Ltd., Kurashiki-shi Okyama 712-8555 (JP); Sasada, Nobuyuki c/o Kurashiki Kako Co., Ltd., Kurashiki-shi Okyama 712-8555 (JP)
(74) Representative: Zinnecker, Armin

(57) **Abstract**

A vibration isolator mount **5** includes: an inner cylinder body **30**; an outer cylinder body **31** arranged around the inner cylinder body **31**; a flange portion **32** provided at a front end portion of the outer cylinder body **31** in the axial direction so as to extend raidally outward; a rubber elastic body **33** interposed between the cylinder bodies **30, 31** to connect therebetween; and a stopper rubber elastic body **34** provided at a face of the flange portion **32** facing outward with respect to the cylinder axial direction. Holes **34a** open at a stopper face **34b** and extending inward along the cylinder axial direction are formed in the stopper rubber elastic body **34**. A rigid body **35** is provided at a part inside than the holes **34a** in the stopper rubber elastic body **34** with respect to the cylinder axial direction.

## Description

### Technical Field

The present invention relates to a vibration isolator.

### Background Art

As vibration isolators used as engine mounts and the like of automobiles, vibration isolators having an inner cylinder body, an outer cylinder body and a rubber elastic body have been known conventionally (see Japanese Patent Application Laid Open Publication No. 2001-295886A, for example). The outer cylinder body is provided coaxially around the outer periphery of the inner cylinder body. The rubber elastic body is interposed between the cylinder bodies so as to connect therebetween. The vibration isolator is arranged so that the axial direction thereof agrees with the longitudinal direction of a vehicle, for example. The inner cylinder body is mounted to a bracket on the engine side by means of a bolt inserted in the hollow of the inner cylinder body, and the outer cylinder body is forcedly inserted and fixed in a hole of a bracket on the vehicle side.

In such a vibration isolator, it is general that a stopper rubber elastic body is provided for restricting relative movement of the inner cylinder body and the outer cylinder body in the axial direction. The stopper rubber elastic body protrudes along the axial direction of the cylinder bodies outward from the face of a flange portion facing outward with respect to the axial direction of the cylinder bodies, the flange portion extending radially outward from an end portion of the outer cylinder body in the axial direction.

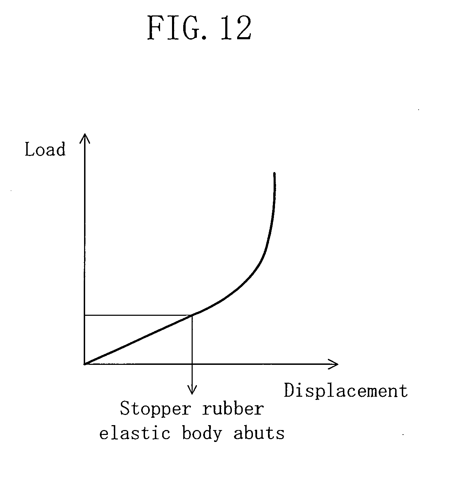

When a load in the longitudinal direction of the vehicle is applied to the above vibration isolator, the spring constant of the vibration isolator in the axial direction is constant until the end face of the stopper rubber elastic body facing outward with respect to the cylinder axial direction (hereinafter referred to as stopper face) abuts on the bracket on the engine side. However, the spring constant in the axial direction changes every moment after the stopper face abuts on the engine side bracket. Namely, as shown in FIG. 12, the static spring characteristic of the vibration isolator is linear until the stopper face of the stopper rubber elastic body abuts on the engine side bracket and is steeply raised after the stopper face abuts on the engine side bracket. In other words, the conventional vibration isolators exhibit a one-stage static spring characteristic, which influences NVH performance of a vehicle adversely. Herein, the NVH performance means a characteristic on which prime importance is put in amenities of vehicles, and is a combination of capital letters of noise, vibration and harshness.

The present inventors have developed a vibration isolator having a two-stage static spring characteristic.

The present invention has been made in view of the above matter and has its object of providing a vibration isolator having a two-stage static spring characteristic.

### Summary of the Invention

The vibration isolator in the first invention includes: a main body including: an inner cylinder body; an outer cylinder body provided around the inner cylinder body; and an elastic body interposed between the cylinder bodies to connect therebetween; and a stopper elastic body which is arranged so that at least a part of the stopper elastic body protrudes outside, with respect to an axial direction of the outer cylinder, than one of end faces of the outer cylinder body in the axial direction of the outer cylinder body and which restricts relative movement of the cylinder bodies in an axial direction, wherein a hole open at an end face facing outward with respect to the axial direction of the outer cylinder body and extending inward along the axial direction of the outer cylinder body is formed in the stopper elastic body, and a rigid body is provided at a part inside than the hole in the stopper elastic body with respect to the axial direction of the outer cylinder body.

In the above construction, the hole open at the end face of the stopper elastic body facing outward with respect to the cylinder axial direction extends in the stopper elastic body along the axial direction of the outer cylinder body. Therefore, the stopper elastic body bulges and is deformed into a potbellied shape (barrel shape) when a load is applied in the axial direction of the outer cylinder body to the vibration isolator after the end face of the stopper elastic body facing outward with respect to the axial direction of the outer cylinder body abuts on a member such as a bracket. Further, the rigid body is provided inside than the hole in the stopper elastic body with respect to the axial direction of the outer cylinder body, and accordingly, the rigid body moves inward along the cylinder axial direction after the stopper elastic body bulges and is deformed up to the limit. With the above operations, the stopper elastic body can have a two-stage static spring characteristic and the linear region in the second stage can be extended.

The vibration isolator in the second invention is characterized in that, in the first invention, a flange portion is provided which extends radially outward at the one side end face of the outer cylinder body in the axial direction of the outer cylinder body, and the stopper elastic body is formed at a face of the flange portion facing outward with respect to the axial direction of the outer cylinder body so as to protrude outward along the axial direction of the outer cylinder body.

The vibration isolator in the third invention is characterized in that, in the second invention, the stopper elastic body is provided at a face of the flange portion facing outward with respect to the axial direction of the outer cylinder body so as to extend in a peripheral direction of the outer cylinder body and is divided in the peripheral direction of the outer cylinder body.

With this construction, the division of the stopper elastic body in the peripheral direction of the outer cylinder body reduces the spring constant in the peripheral direction of the outer cylinder body, compared with a vibration isolator of which stopper elastic body is not divided.

The vibration isolator in the fourth invention is characterized in that, in the second invention, a dipped portion open at an end face facing inward with respect to the axial direction of the outer cylinder body is formed at a part inside than the rigid body of the stopper elastic body with respect to the axial direction of the outer cylinder body.

With this construction, the dipped portion open at the end face facing inward with respect to the axial direction of the outer cylinder body is formed at a part inside than the rigid body of the stopper elastic body with respect to the axial direction of the outer cylinder body. Hence, the spring constant in the axial direction of the outer cylinder body can be reduced, compared with a vibration isolator with no dipped portion formed.

### -Effects of the Invention-

According to the first invention, the hole open at the end face of the stopper elastic body facing outward with respect to the cylinder axial direction extends in the stopper elastic body along the axial direction of the outer cylinder body. Therefore, the stopper elastic body bulges and is deformed into a potbellied shape (barrel shape) when a load is applied in the axial direction of the outer cylinder body to the vibration isolator after the end face of the stopper elastic body facing outward with respect to the axial direction of the outer cylinder body abuts on a member such as a bracket. Further, the rigid body is provided inside than the hole in the stopper elastic body with respect to the cylinder axial direction, and accordingly, the rigid body moves inward along the cylinder axial direction after the stopper elastic body bulges and is deformed up to the limit. With the above operations, the stopper elastic body can have a two-stage static spring characteristic and the linear region in the second stage can be extended. Therefore, even if a load applied in the axial direction of the outer cylinder body to the vibration isolator varies, no influence affects on the NHV performance of the vehicle.

According to the third invention, the stopper elastic body is divided in the peripheral direction of the outer cylinder body, so that the spring constant in the peripheral direction of the outer cylinder body is reduced, compared with a vibration isolator mount of which stopper elastic body is not divided. Thus, even if the spring constant in the axial direction of the outer cylinder body becomes large due to deformation of the stopper elastic body along the axial direction of the outer cylinder body by application of a large load in the axial direction of the outer cylinder body to the vibration isolator, change in the spring constant in the peripheral direction of the outer cylinder body can be reduced, compared with that in the case with the stopper elastic body not divided.

According to the fourth invention, the dipped portion open at the end face facing inward with respect to the axial direction of the outer cylinder body is formed at a part inside than the rigid body of the stopper elastic body with respect to the axial direction of the outer cylinder body. Hence, the spring constant in the axial direction of the outer cylinder body can be reduced, compared with that in the case with no dipped portion formed. Therefore, the spring constant in the axial direction of the outer cylinder body can be adjusted by forming such a dipped portion.

### Brief Description of the Drawings

FIG. **1** is a perspective view showing a schematic construction of an engine mount system in embodiments of the present invention.
FIG. **2** is an explanatory drawing schematically showing a state where driving reaction force acts, when viewing a power plant from the left side of a vehicle.
FIG. **3** is a front view of a vibration isolator mount.
FIG. **4** is a section taken along a line IV-IV in FIG. **3.**
FIG. **5** is a graph illustrating a static spring characteristic of the vibration isolator mount.
FIG. **6** is a front view of another vibration isolator mount.
FIG. **7** is a section taken along a line IIV-IIV in FIG. **6.**
FIG. **8** is a front view of still another vibration isolator mount.
FIG. **9** is a section taken along a line IX-IX in FIG. **8.**
FIG. **10** is a section showing a vibration isolator mount of which stopper rubber elastic body is provided separately from a rubber elastic body and corresponding to FIG. **4.**
FIG. **11A** and FIG. **11B** are diagrams showing steps of mounting to a bracket on a vehicle side the vibration isolator mount of which spotter rubber elastic body is provided separately from the rubber elastic body.
FIG. **12** is a diagram showing a static spring characteristic of a conventional vibration isolator.

### Detailed Description of the Invention

Embodiments of the present invention will be described below with reference to accompanying drawings.

### (Embodiment 1)

### (Whole Construction of Engine Mount System)

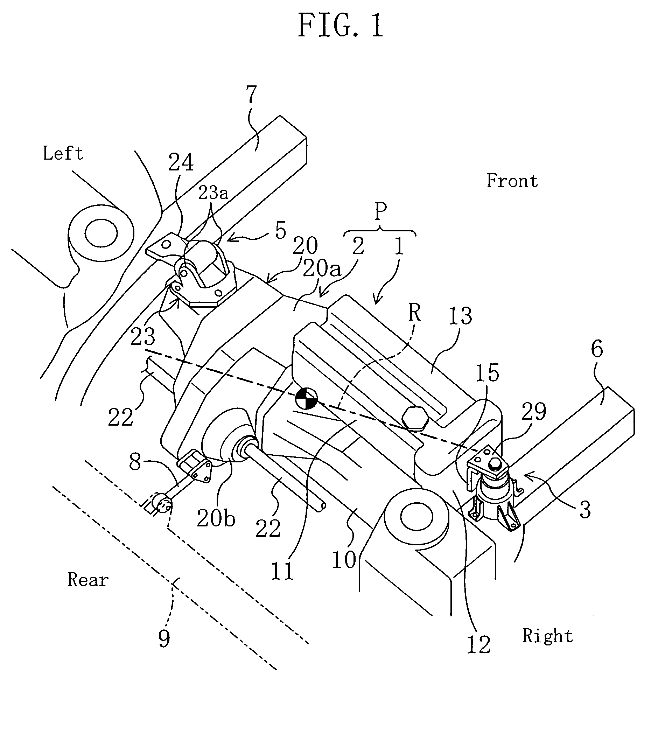

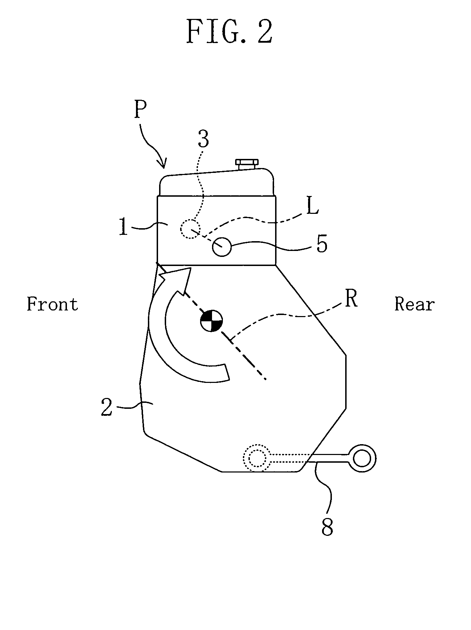

FIG. **1** is a perspective view showing a schematic construction of an engine mount system in the embodiments of the present invention. Wherein, FIG. **1** shows a main part of the engine 1, from which an exhaust system, an auxiliary and the like are all omitted, when viewed obliquely, downwardly from the right rear side of a vehicle. FIG. **2** is an explanatory drawing schematically showing a state where driving reaction force acts, when viewing a power plant from the left side of the vehicle. In both the drawings, reference **P** denotes the power plant composed of the engine **1** and a transmission **2** which are connected in series. The power plant **P** is arranged horizontally in an engine room (not shown) of an automobile so that the longitudinal direction thereof (direction that a crank shaft of the engine **1** extends) agrees with the widthwise direction of the vehicle (sideways direction of the vehicle), and is elastically supported by vehicle side frames **6, 7** by means of vibration isolator mounts **3, 5** respectively arranged at end portions in the longitudinal direction of the power plant **P.** The power plant **P** is connected at the lower end portion thereof to a vehicle side member **9** (sub frame or the like) located posterior to the power plant **P** by means of a torque rod **8.**

The main part of the engine **1** is composed of a cylinder block **10** and a cylinder head **11** arranged thereon. A belt cover **12** is disposed at the end portion in the longitudinal direction opposite the transmission **2** (vehicle right end portion indicated frontward in FIG. **1),** and a head cover **13** is arranged over the cylinder head **11.** An oil pan (not sown) is disposed under the cylinder block **10.** An engine side mount bracket **15** is connected to the right wall of the cylinder head **11.** The upper end portion of the engine side mount bracket **15** is connected to a flange plate **29** that extends from the vibration isolator mount 3 on the engine side in a fashion that the flange plate **29** is overlaid from above.

As the transmission **2,** an automatic transmission is used in which a differential is integrated in addition to a torque converter and a transmission gear column. A bell housing **20a** of a transmission case **20** is connected to the end portion of the cylinder block **10** on the clank shaft side of the engine **1.** Drive shafts **22, 22** for driving front wheels of the automobile extend sideways respectively from an expanded portion **20b** formed at the back of the bell housing **20a.** The tip end of the transmission case **20,** which is tapered, is suspended from the side frame **7** on the vehicle left side by means of a bifurcate transmission side mounting bracket **23,** the vibration isolator mount **5** on the transmission and a vehicle side bracket **24.**

In the power plant **P,** the engine **1** is taller than the transmission **2,** and therefore, the rolling axis **R** (axis of rolling inertia) extending in the longitudinal direction is slanted downward toward the transmission **2** from the engine **1,** as indicated by long and short dashed lines in FIG. **2.** The vibration isolator mounts **3, 5,** which receive and share the weight of the power plant **P,** are distant from the rolling axis **R** upwardly. In this connection, the power plant **P** is swingable as a pendulum around a segment **L** (swing axis: see FIG. **2)** connecting the two load support points of the vibration isolator mounts **3, 5.**

When large driving reaction force (torque) acts at, for example, hard acceleration or hard deceleration of the automobile, the power plant **P** is to swing as a whole like a pendulum back and forth with the swing axis **L** as a center, while revolving (rolling) around the rolling axis **R** as schematically indicated by an outline arrow in FIG. **2.** This rolling and swinging as a whole is restricted by the torque rod **8** disposed at the lower end portion of the power plant **P** and is also restricted by the right and left vibration isolator mounts **3, 5.** In detail, even when a large load in the longitudinal direction of the vehicle to the vibration isolator mounts **3, 5** is applied due to rolling of the power plant **P** by driving reaction force and the like at acceleration or deceleration, the right and left vibration isolator mounts **3, 5** receive the load, thereby restricting the swing of the power plant **P** surely.

### (Construction of Vibration Isolation Mount Device on Transmission Side)

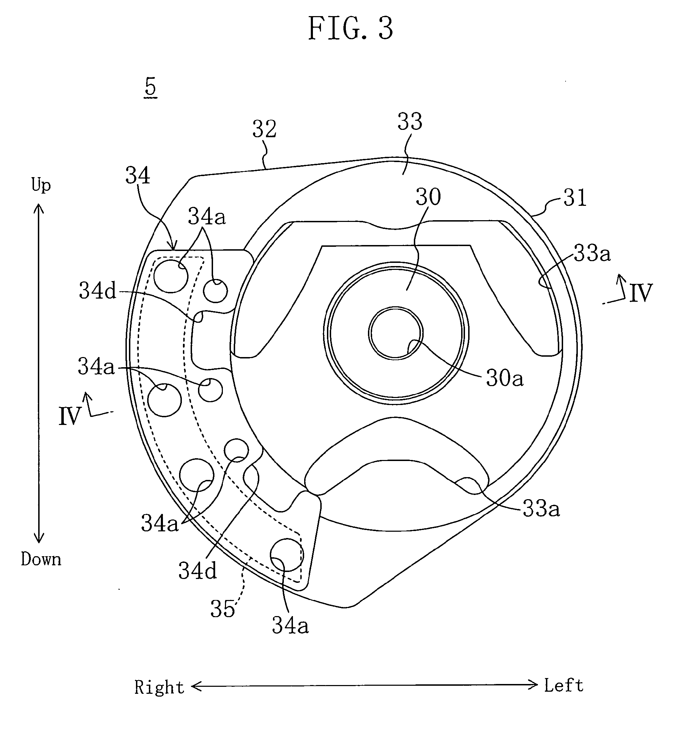

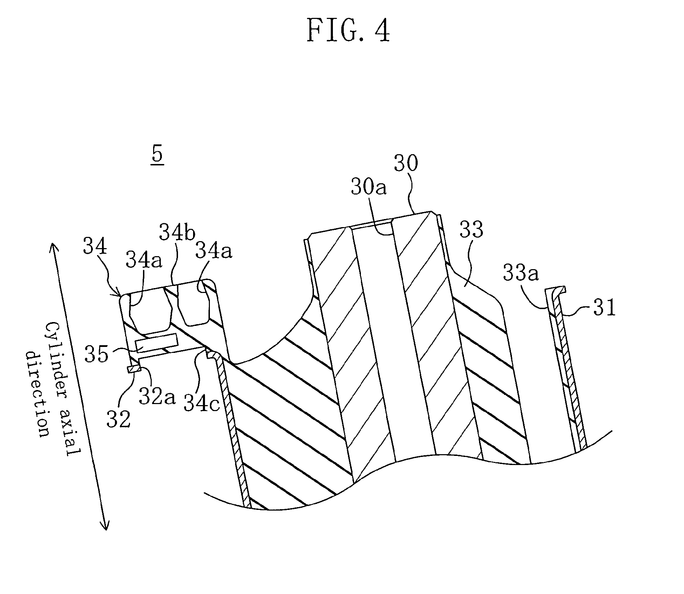

The detailed construction of the vibration isolator mount **5** on the transmission side out of the two vibration isolator mounts **3, 5** will be described next with reference to FIG. **3** and FIG. **4.** Herein, FIG. **3** is a front view of the vibration isolator mount **5** and FIG. **4** is a section taken along the line IV-IV in FIG. **3.** The detailed description of the vibration isolator mount **3** on the engine side, which has a conventionally known basic construction, is omitted.

The vibration isolator mount **5** is arranged so that the axial direction of an inner cylinder body **30** and an outer cylinder body **31** (hereinafter referred to as cylinder axial direction) agrees with the longitudinal direction of the vehicle. The vibration isolator mount **5** includes: the inner cylinder body **30** of which inside is hollow; the outer cylinder body **31** of which inside is hollow and which is arranged coaxially around the outer periphery of the inner cylinder body **30;** a flange portion **32** extending radially outward from the front end portion of the outer cylinder body **31** in the cylinder axial direction; a rubber elastic body **33** interposed between the inner cylinder body **30** and the outer cylinder body **31** to connect therebetween; and a stopper rubber elastic body **34** provided on the outer face of the flange portion (hereinafter referred to as front face) facing outward (vehicle front side) with respect to the cylinder axial direction. Herein, the inner cylinder body **30,** the outer cylinder body **31** and the rubber elastic body **34** compose a main body in the present invention.

The inner cylinder body **30** is mounted to the crotches **23a, 23a** of the transmission side mount bracket **23** (see FIG. **1)** by means of a bolt (not shown) inserted through the hollow **30a.** The inner cylinder body **30** is longer in the axial direction than the outer cylinder body **31.** Namely, the respective end portions of the inner cylinder body **30** in the cylinder axial direction are located outside the respective end portions of the outer cylinder body **31** in the cylinder axial direction. The inner cylinder body **30** is thicker than the outer cylinder body **31.** The outer cylinder body **31** is forcedly inserted and fixed in a hole (not shown) of the vehicle side bracket **24** (see FIG. **1)** mounted to the side frame **7** on the left side of the vehicle. The flange portion **32** is integrally formed with the outer cylinder body **31** so as to extend in the peripheral direction of the outer cylinder body **31** (hereinafter referred to as cylinder peripheral direction) in the right half of the outer cylinder body **31** at the front end portion with respect to the cylinder axial direction. In the rubber elastic body **33,** through holes **33a, 33a** passing therethrough in the cylinder axial direction are formed.

The stopper rubber elastic body **34** is provided for restricting relative movement of the inner cylinder body **30** and the outer cylinder body **31** in the axial direction, and is integrally formed with the rubber elastic body **33.** The stopper rubber elastic body **34** is arranged at the front face of the flange portion **32** so as to protrude outward (vehicle front side) along the cylinder axial direction and extend in the cylinder peripheral direction. In other words, the stopper rubber elastic body **34** is arranged so that at least a part thereof is located outside (vehicle front side) the front end face of the outer cylinder body **31** with respect to the cylinder axial direction. The thickness of the stopper rubber elastic body **34** (length along the cylinder axial direction) is substantially uniform in the cylinder peripheral direction.

A plurality of holes **34a, 34a** ... are formed in the stopper rubber elastic body **34,** wherein the number of the holes **34a, 34a** ... is seven in the present embodiment. Each hole **34a** opens outward with respect to the cylinder axial direction (vehicle front side) at the end face of the stopper rubber elastic body **34** (hereinafter referred to as stopper face) facing outward with respect to the cylinder axial direction and extends inward along the cylinder axial direction almost to the vicinity of the central portion of the stopper rubber elastic body **34** in the cylinder axial direction. Further, each hole **34a** is in a circular form, when viewed along the cylinder axial direction. The diameter of each hole **34a** becomes larger linearly as it goes from the outer end portion toward the central portion of the hole **34a** along the cylinder axial direction and becomes smaller linearly as it goes form the central portion toward the other end portion, the bottom thereof along the cylinder axial direction. Preferably, the sum of the open areas of the holes **34a , 34a** ...is set in the range from 10% to 20% of the area of the stopper face **34b.**

In the inner peripheral part of the stopper rubber elastic body **34,** two concave parts **34d, 34d** are formed so as to dipped radially outward. The concave portions **34d, 34d** extend in the cylinder axial direction.

A solid rigid body **35** is embedded in the stopper rubber elastic body **34** at a part inside than the bottom of the holes **34a** with respect to the cylinder axial direction. The rigid body **35** is made of an iron plate, and extends in the cylinder peripheral direction along the front face of the flange portion **32.** The area of one face of the rigid body **35** in the cylinder axial direction is smaller than the sectional area of the stopper rubber elastic body **34** in a direction intersecting at a right angle with the cylinder axis, namely, smaller than the area of the stopper face **34b.**

A dipped portion **34c** is formed in the stopper rubber elastic body **34** at a part inside than the rigid body **35** with respect to the cylinder axial direction. The dipped portion **34c** opens inward along the cylinder axial direction at the end face of the stopper rubber elastic body **34** facing inward with respect to the cylinder axial direction (toward vehicle rear side). The spring constant in the cylinder axial direction is adjustable by adjusting the size of the dipped portion **34c.** In the flange portion **32,** a through hole **32a** is formed at a part corresponding to the dipped portion **34c** so as to pass through the flange portion **32** in the thickness direction thereof.

### -Operation of Vibration Isolator Mount-

The operation of the vibration isolator mount **5** in the case where a load is applied in the longitudinal direction of the vehicle to the vibration isolator mount **5** will be described below. First, the spring constant of the vibration isolator mount **5** in the cylinder axial direction is constant until the stopper face **34b** of the stopper rubber elastic body **34** abuts on the transmission side mount bracket **23.**

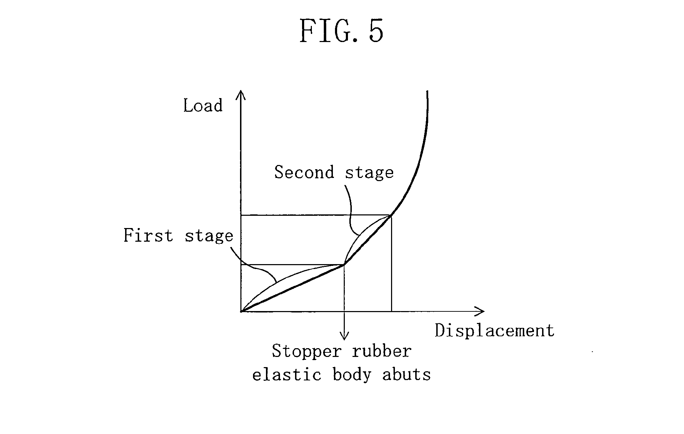

After the stopper face **34b** abuts on the transmission side mount bracket **23,** the stopper rubber elastic body **34** bulges and is deformed into a potbellied shape (a barrel shape). Then, after the stopper rubber elastic body **34** bulges and is deformed up to the limit, the rigid body **35** moves inward along the cylinder axial direction. By these operations, the spring constant in the cylinder axial direction becomes substantially constant, though it is increased, even after the stopper face **34b** abuts on the transmission side mount bracket **23.** In other words, as shown in FIG. **5,** the static spring characteristic of the vibration isolator mount **5** is linear until the stopper face **34b** of the stopper rubber elastic body **34** abuts on the transmission side mount bracket **23** and is still linear after the abutting though the inclination increases. In short, the vibration isolator mount **5** exhibits a two-stage static spring characteristic.

### -Effects-

As described above, in the present embodiment, the holes **34a, 34a,** ... open at the stopper face **34b** and extending inward along the cylinder axial direction are formed in the stopper rubber elastic body **34.** Therefore, when a load is applied in the longitudinal direction of the vehicle to the vibration isolator mount 5, the stopper rubber elastic body **34** bulges and is deformed into the potbellied shape (barrel shape) after the stopper face **34b** of the stopper rubber elastic body **34** abuts on the transmission side mount bracket **23.** Further, the rigid body **35** is provided at the part inside than the holes **34a, 34a,** ... in the stopper rubber elastic body **34** with respect to the cylinder axial direction so as to move inward along the cylinder axial direction after the stopper rubber elastic body **34** bulges up to the limit. With this arrangement, the stopper rubber elastic body **34** can exhibits the two-stage static spring characteristic and the linear region in the second stage thereof can be extended. Hence, variation of a load in the longitudinal direction of the vehicle to be applied to the vibration isolator mount **5** does not influence the NHV performance of the vehicle.

In addition, the dipped portion **34c** open at the end face facing inward with respect to the cylinder axial direction is formed at the part inside than the rigid body 35 of the stopper rubber elastic body **34** with respect to the cylinder axial direction. Thus, the spring constant in the cylinder axial direction can be reduced, compared with the case with no dipped portion **34c** formed. Thus, the formation of the dipped portion **34c** enables adjustment of the spring constant in the cylinder axial direction.

### (Embodiment 2)

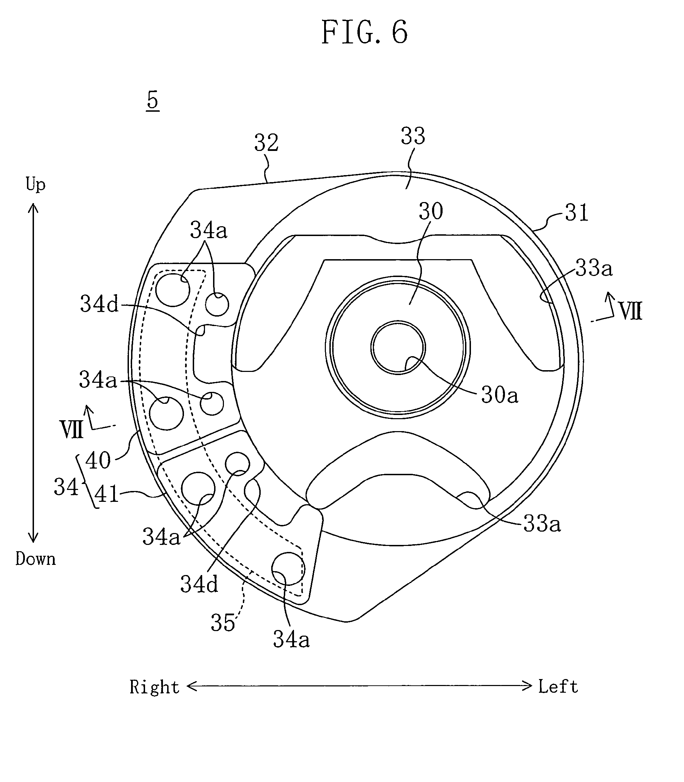

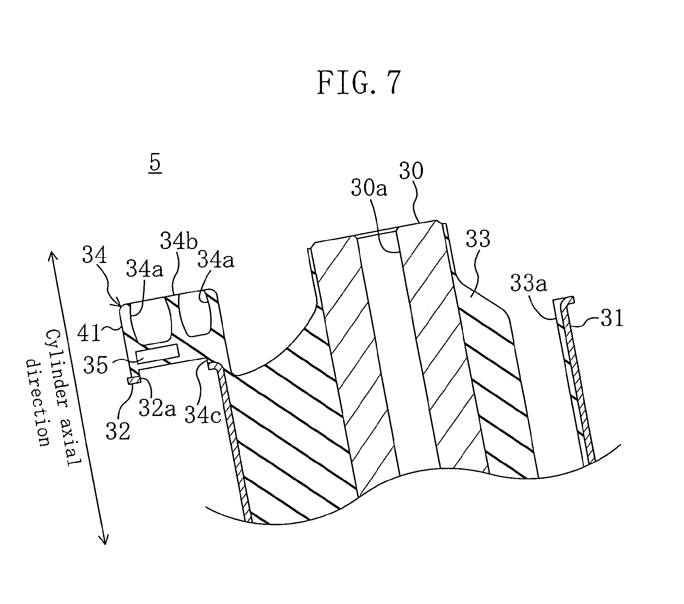

The stopper rubber elastic body **34** is divided in plural in the cylinder peripheral direction in the present embodiment. Namely, as shown in FIG. **6,** the stopper rubber elastic body **34** is divided at the center in the peripheral direction thereof into two so as to be composed of first and second stopper rubber elastic bodies **40, 41.** Four holes **34a, 34a,** ... are formed in the first stopper rubber elastic body **40** and three holes **34a, 34a,** ... are formed in the second stopper rubber elastic body **41.** As shown in FIG. **7,** the diameter of each hole **34a** becomes larger curvilinearly as it goes from the outer end portion toward the central portion of the hole **34a** along the cylinder axial direction and becomes smaller curvilinearly as it goes from the central portion toward the bottom thereof along the cylinder axial direction. The other features of the present embodiment are substantially the same as those in Embodiment 1.

### -Effects-

As described above, in the present embodiment, the stopper rubber elastic body **34** is divided in the cylinder peripheral direction into two, so that the spring constant in the cylinder peripheral direction (vertical direction in the present embodiment) is reduced, compared with the case with the stopper rubber elastic body not divided. Thus, even if the spring constant in the cylinder axial direction becomes large due to deformation of the stopper rubber elastic body **34** along the cylinder peripheral direction by application of a large load in the longitudinal direction of the vehicle to the vibration isolator mount **5**, change in the spring constant in the cylinder peripheral direction (vertical direction in the present embodiment) can be reduced, compared with the case with the stopper rubber elastic body not divided.

### (Embodiment 3)

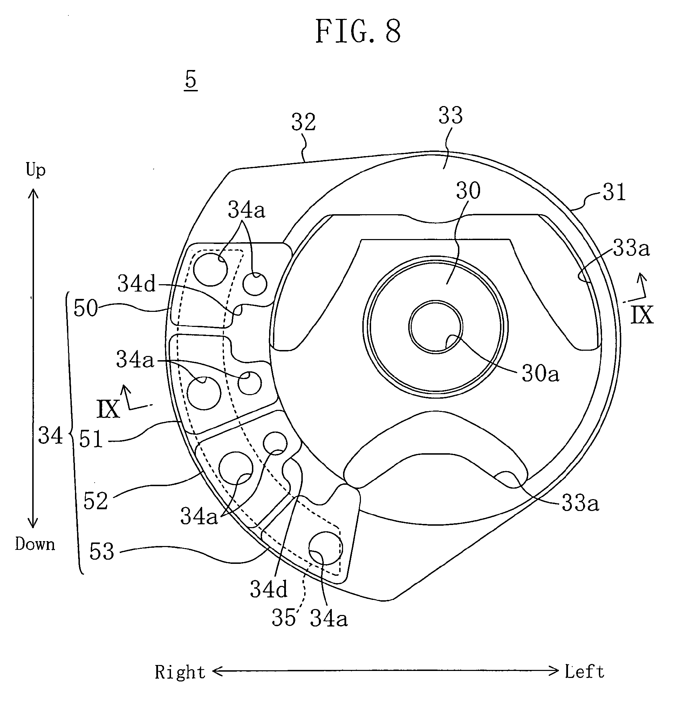

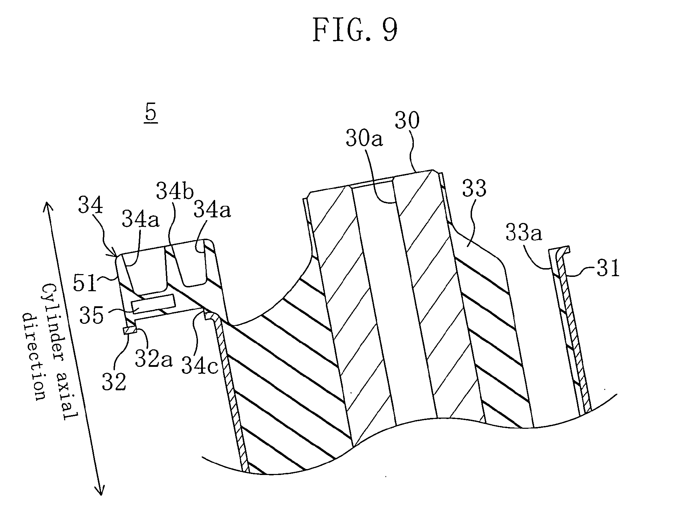

The stopper rubber elastic body **34** is divided in the cylinder peripheral direction into plural also in the present embodiment. In detail, as shown in FIG. **8,** the stopper rubber elastic body **34** is substantially equally divided in the cylinder peripheral direction into four so as to be composed of first to fourth stopper rubber elastic bodies **50, 51, 52, 53.** Two holes **34a, 34a** are formed in each of the first to third stopper rubber elastic bodies **50, 51, 52,** and one hole **34a** is formed in the fourth stopper rubber elastic body **53.** As shown in FIG. **9,** the diameter of each hole **34a** is linearly reduced as it goes from the outer end portion toward the bottom thereof along the cylinder axial direction. In other wards, each hole **34a** is tapered. The other features in the present embodiment are substantially the same as those in Embodiment 1.

According to the present embodiment, substantially the same operations and effects as in the Embodiment 2 can be obtained.

### (Embodiment 4)

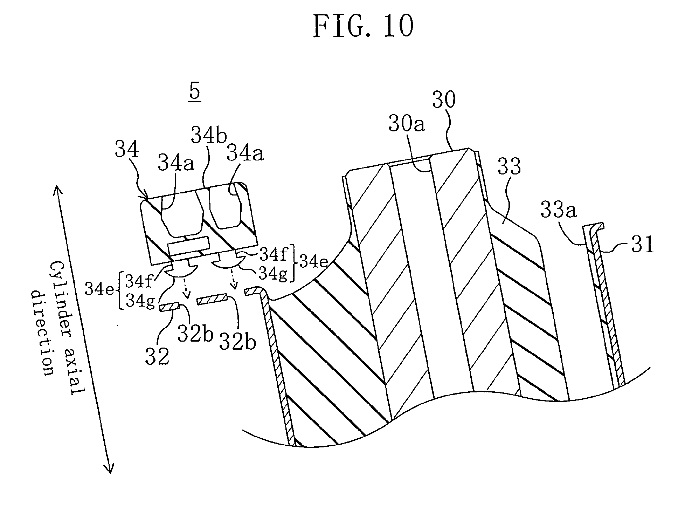

As shown in FIG. **10,** a stopper rubber elastic body **34** is provided separately from the rubber elastic body **33** in the present embodiment. A plurality of protrusions **34e, 34e,** ... protruding inward with respect to the cylinder axial direction (toward vehicle rear side) are formed at the end face of the stopper rubber elastic body **34** facing inside with respect to the cylinder axial direction (vehicle rear side). Each protrusion **34e** is made of a rubber and includes a beam part **34f** and a cap part **34g** formed at the tip end of the beam part **34f.** In the flange portion **32,** a plurality of through holes **32b, 32b,** ... passing through the flange portion **32** in the thickness direction thereof are formed so as to correspond respectively to the protrusions **34e, 34e,** ... of the stopper rubber elastic body **34.** The other features in the present embodiment are substantially the same as those in Embodiment 1.

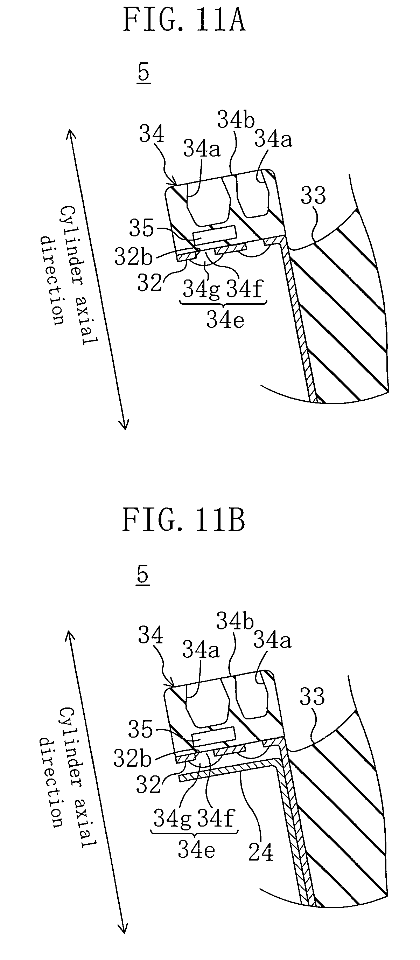

The process of mounting the vibration isolator mount **5** to the vehicle side bracket **34** will be described below with reference to FIGS. **11A** and **11B.** First, as shown in FIG. **11A,** the respective protrusions **34e** of the stopper rubber elastic body **34** are inserted into the respective through holes **32b** of the flange portion **32** so that the cap part **34g** of each protrusion **34e** rests on the face of the flange portion **32** facing inward with respect to the cylinder axial direction, whereby the stopper rubber elastic body **34** is mounted and fixed to the flange portion **34g.** Then, as shown in FIG. **11B,** the outer cylinder body **31** is forcedly inserted and fixed into the hole of the vehicle side bracket **24,** so that the vibration isolator mount **5** is mounted and fixed to the vehicle side bracket **24.** At this time, the cap part **34g** of each protrusion **34e** is sandwiched and crushed between the flange portion **32** and the vehicle bracket **24.**

According to the present embodiment, substantially the same operations and effects can be obtained as those in Embodiment 1.

### (Other Embodiments)

It is noted that the inner cylinder body **30** and the outer cylinder body **31** are arranged coaxially in each of the above embodiments, but any arrangement is possible only if the axial direction of the inner cylinder body **30** agrees with the axial direction of the outer cylinder body **31.**

The flange portion **32** is formed at the outer cylinder body **31** in each of the above embodiments, but may be formed at a body frame bracket or the like.

The stopper rubber elastic body **34** is provided at the outer cylinder body **31** in each of the above embodiments, but may be provided at the inner cylinder body **30** or the rubber elastic body 33 only if at least a part of the stopper rubber elastic body **34** protrudes outward, with respect to the cylinder axial direction, than the front end face of the outer cylinder body **31** in the cylinder axial direction.

The stopper rubber elastic body **34** is provided at the front end portion of the outer cylinder body **31** in the cylinder axial direction in each of the above embodiments, but may be provided at the rear end portion of the outer cylinder body **31** in the cylinder axial direction according to necessity. Further, it is possible to provide the stopper rubber elastic body **34** at each end portion of the outer cylinder body **31** in the cylinder axial direction.

The shape, size and position of each hole **34a** are determined based on a static spring characteristic of a vibration isolator mount to be required, and thus, the shape, size and position of each hole **34a** may be those other than in the above embodiments, respectively.

The shape, size and position of the rigid body **35** are determined based on a static spring characteristic of a vibration isolator mount to be required, and thus, the shape, size and position of the rigid body **35** may be those other than in the above embodiments, respectively.

The area of one face in the cylinder axial direction of the rigid body **35** is smaller than the area of the stopper face **34b** of the stopper rubber elastic body **34** in each of the above embodiments, but may be equal.

The dipped portion **34c** is formed inside than the rigid body **35** of the stopper rubber elastic body **34** with respect to the cylinder axial direction in the above embodiments, but may not be formed. In the case with the dipped portion **34c** not formed, the spring constant of the vibration isolator mount **5** in the cylinder axial direction becomes larger than that in the case where the dipped portion **34c** is formed.

The through hole **32a** is formed in the flange portion **32** in the above embodiments, but may not be formed.

An automatic transmission is used as the transmission **2** in the above embodiments, but a manual transmission or a CVT (continuously variable transmission) may be used.

The present invention is not limited to the above embodiments and many widely different embodiments of the present invention may be made without departing from the sprint and scope thereof.

The above described embodiments are merely illustrative in every point and must not be construed restrictively. The scope of the present invention is defined by the appended claims and is not limited by any of the details of description. Further, modification and variation which belong to equivalent scope of the claims of the present invention fall within the scope of the claims of the present invention.

### -Industrial Applicability-

As described above, the present invention is effective for vibration isolators and the like which include an inner cylinder body, an outer cylinder body provided around the inner cylinder body, an elastic body interposed between the inner cylinder body and the outer cylinder body to connect therebetween, and a stopper elastic body for restricting relative movement of the cylinder bodies in the axial direction.

## Claims

1. A vibration isolator, comprising:
a main body including:
an inner cylinder body;
an outer cylinder body provided around the inner cylinder body; and
an elastic body interposed between the cylinder bodies to connect therebetween; and
a stopper elastic body which is arranged so that at least a part of the stopper elastic body protrudes outside, with respect to an axial direction of the outer cylinder, than one of end faces of the outer cylinder body in the axial direction of the outer cylinder body and which restricts relative movement of the cylinder bodies in an axial direction,
wherein a hole open at an end face facing outward with respect to the axial direction of the outer cylinder body and extending inward along the axial direction of the outer cylinder body is formed in the stopper elastic body, and
a rigid body is provided at a part inside than the hole in the stopper elastic body with respect to the axial direction of the outer cylinder body.

2. The vibration isolator in Claim 1, wherein a flange portion is provided which extends radially outward at the one side end face of the outer cylinder body in the axial direction of the outer cylinder body, and
the stopper elastic body is formed at a face of the flange portion facing outward with respect to the axial direction of the outer cylinder body so as to protrude outward along the axial direction of the outer cylinder body.

3. The vibration isolator in Claim 2, wherein the stopper elastic body is provided at a face of the flange portion facing outward with respect to the axial direction of the outer cylinder body so as to extend in a peripheral direction of the outer cylinder body and is divided in the peripheral direction of the outer cylinder body.

4. The vibration isolator in Claim 2, wherein a dipped portion open at an end face facing inward with respect to the axial direction of the outer cylinder body is formed at a part inside than the rigid body of the stopper elastic body with respect to the axial direction of the outer cylinder body.
